Europäisches Patentamt

European Patent Office

Office européen des brevets

(11) Numéro de publication: **0 032 209**
A2

(12) ## DEMANDE DE BREVET EUROPEEN

(21) Numéro de dépôt: **80107825.4**

(22) Date de dépôt: **11.12.80**

(51) Int. Cl.³: **G 01 N 27/70**

(30) Priorité: **11.12.79 FR 7930399**

(43) Date de publication de la demande:
**22.07.81 Bulletin 81 29**

(84) Etats contractants désignés:
**DE FR GB IT**

(71) Demandeur: **Murtin, Fernand Raoul Charles**
**16 bis rue Augereau**
**F - 75007 Paris(FR)**

(72) Inventeur: **Murtin, Fernand Raoul Charles**
**16bis rue Augereau**
**F-75007 Paris(FR)**

(72) Inventeur: **Barat, Jean**
**17 rue de Paron**
**F-91370 Verrières-le-Buisson(FR)**

(74) Mandataire: **Casalonga, Axel et al,**
**BUREAU D.A. CASALONGA OFFICE JOSSE & PETIT**
**Lilienstrasse 77**
**D-8000 München 80(DE)**

(54) **Sonde électrique à décharge électrique en arc pour la mesure proportionnelle de la concentration en oxygène dans un gaz composite, en particulier dans les gaz issus d'une combustion chimique air-carburant.**

(57) Sonde électrique à décharge électrique en arc pour la mesure proportionnelle de la concentration en oxygène dans un gaz composite, en particulier dans les gaz issus d'une combustion chimique air-carburant.

Les deux électrodes (2,4) sont réalisées sous la forme de deux pointes effilées se faisant face et légèrement écartées de façon à obtenir une décharge symétrisée. L'une des électrodes est soumise à une haute tension de façon à obtenir une décharge en arc lumineux et bruyante.

Le résultat de la mesure qui peut être la valeur moyenne du courant apparaissant entre les électrodes ou la valeur moyenne de la haute-tension appliquée ou encore la fréquence des décharges, présente une remarquable indépendance par rapport aux variations de température grâce à la "symétrisation" de la décharge.

FIG.1

EP 0 032 209 A2

Sonde électrique à décharge électrique en arc pour la mesure proportionnelle de la concentration en oxygène dans un gaz composite, en particulier dans les gaz issus d'une combustion chimique air-carburant.

La présente invention est relative à la détection et à la mesure proportionnelle de la concentration d'oxygène dans les gaz de combustion au moyen de décharges électriques entre des systèmes d'électrodes. Ces gaz de combustion peuvent être des gaz d'échappement d'un moteur à combustion ou des gaz brulés issus d'un réacteur ou d'une chaudière d'un type quelconque.

De façon générale, la combustion dans l'air d'un carburant donne dans les gaz brûlés une concentration d'oxygène qui va de 0% (mélanges riches) à plusieurs % (mélanges pauvres).

Le rendement de la combustion ou la teneur en espèces polluantes, en particulier en oxydes d'azote $NO_x$, des gaz de combustion dépend de façon étroite de la richesse du mélange air/carburant, cette richesse étant parfaitement définie par la concentration d'oxygène dans les gaz brûlés. Suivant le résultat souhaité (rendement optimum - faible pollution ...), il est donc possible d'asservir la combustion (pauvre - riche) à partir de la teneur en oxygène dans les gaz de combustion.

Les procédés de mesure connus ne permettent pas un contrôle continu de la combustion dans des conditions satisfaisantes en ce qui concerne notamment le prix de revient, la fiabilité et la précision.

Par exemple, les sondes à oxyde de zirconium qui sont utilisées commercialement pour la détection de la présence d'oxygène ne donnent qu'une réponse en tout ou rien ou fortement dépendante de la température.

D'autres appareils déjà décrits utilisant des décharges électriques permettent de faire des mesures de concentrations très faibles et ce fréquemment de façon proportionnelle.

Par contre, aucun de ces appareils ne permet de faire une mesure essentiellement indépendante de la température du gaz à analyser. De plus, ils manquent de reproductibilité dans les mesures et de fiabilité dans le temps.

Dans la demande de brevet FR 78 12809, il a été décrit un système permettant de s'affranchir des variations de température en utilisant deux décharges en couronne ou "décharges Corona" portées à la même température, l'une dans un gaz à composition constante (l'air atmosphérique) et l'autre dans le mélange dont on veut mesurer la concentration. Le courant différentiel obtenu est une mesure indépendante de la température.

Cependant, l'effet de température sur une décharge Corona assymétrique (pointe/plaque - fil/plaque ou cylindre) est important dans un grand nombre de cas, et en particulier pour les gaz d'échappement des moteurs à combustion, et la précision de la mesure d'oxygène risque d'être gravement affectée aux faibles concentrations. Une autre source d'inconvénients réside dans le fait que les deux décharges que l'on compare ne sont pas, pour des raisons évidentes de principe, situées au même endroit et dans les mêmes conditions : elles peuvent donc évoluer différemment au cours du temps par un effet de vieillissement et par suite donner un courant différentiel variable introduisant une nouvelle source d'erreur.

D'autre part, les dispositifs à électrodes dissymétriques et fonctionnant en décharge Corona se comportent comme des filtres électrostatiques, capteurs de toutes les particules et impuretés se trouvant dans les gaz de combustion.

On sait que, quand on porte un système de deux électrodes à des différences de potentiels électriques suffisamment élevées, on obtient un courant de décharge à partir du moment où la différence de potentiel atteint une certaine valeur critique dépendant de la pression et de la température. Au fur et à mesure que la différence de potentiel augmente, le courant augmente et le type de décharge n'est plus le même : on passe d'une décharge très faiblement lumineuse et pratiquement silencieuse connue sous l'appellation de décharge Corona à une décharge électrique en arc lumineuse et bruyante ou décharge "en étincelle" analogue aux décharges apparaissant entre les électrodes des bougies d'allumage sur les moteurs à combustion interne. Une telle décharge en étincelle ou en arc est en outre caractérisée par une très grande température des charges électriques qui la composent. Ces températures sont en effet supérieures à 10.000° Kelvin et souvent voisines de 20 à 30.000°K.

On sait également que la décharge s'amorce d'autant plus facilement que, pour une même différence de potentiel entre les électrodes, le champ électrique au voisinage d'une des deux électrodes est plus fort, ce qui conduit à utiliser des électrodes avec de très faibles rayons de courbure (fil de petit diamètre  pointes ...) en face d'une surface à grand rayon de courbure (plaque - cylindre ....). Dans la présente description, on appellera "décharge assymétrique" la décharge qui en résulte et qui est couramment utilisée dans la plupart des appareils visant à mesurer des impuretés dans un gaz donné.

On constate cependant, que la sensibilité de la décharge à la température est, toutes conditions égales par ailleurs, d'autant plus grande que la décharge est assymétrique et que le courant est plus faible. La sensibilité à la concentration d'oxygène dans un gaz non ionisé mais ionisable est, elle, beaucoup plus insensible à la géométrie.

On sait en outre, que l'effet de température sur une même décharge dépend du sens du courant. Si on prend, par exemple, une décharge pointe/plan, l'effet de la température sera d'augmenter le courant quand la pointe est à un potentiel positif par rapport à la plaque et au contraire de diminuer ce courant quand la pointe est à un potentiel inférieur (pointe en polarité négative). Il faut, cependant, bien remarquer que, pour une même géométrie et pour une même différence de potentiel, le courant absolu de décharge n'est pas le même dans les deux sens et, à fortiori, les variations liées à la température.

La présente invention a pour objet de supprimer les inconvénients des sondes de mesure de type connu et en particulier les variations que l'on observe dans la précision et l'exactitude de la mesure lorsque les conditions de température et de pression du gaz à analyser varient.

L'invention repose sur l'utilisation de décharges en étincelle successives présentant des caractéristiques tension/courant particulières ainsi que des températures de charges électriques très élevées.

La théorie du fonctionnement d'une sonde à éclateur peut être faite à partir de la loi de conservation de l'énergie dans une étincelle électrique (ELENBAAS-HELLER), de la loi de l'ionisation thermique (SAHA), de la loi de la conductibilité électrique et de la loi d'Ohm. A partir de ces éléments on peut en effet déterminer le courant électrique moyen $I_{moy}$ circulant entre les deux électrodes d'une sonde à éclateur :

$$I_{moy} = K \sqrt{PO_2} \ (E)^{-3}$$

où $PO_2$ est la pression partielle d'oxygène dans une concentration d'azote donnée E est le champ électrique interélectrodes et K est une constante dépendant de la géométrie et de la nature des électrodes. On voit que la mesure apparaît donc en théorie comme indépendante de la température.

L'invention repose en outre sur l'idée inventive selon laquelle il est possible de choisir une géométrie particulière pour les systèmes d'électrodes d'une telle sonde afin d'améliorer encore l'indépendance de la mesure aux variations de température ainsi qu'à la présence d'impuretés dans le gaz. Il est également possible de définir des géométries distinctes de façon que le courant traversant l'une, dans un sens, soit égal au courant traversant l'autre dans l'autre sens et cela pour la même différence de potentiel aux bornes : il y a "symétrisation" de la décharge.

En toute rigueur, cette symétrisation ne peut se faire que sur une plage de fonctionnement donnée (température - concentration d'oxygène..) mais, on constate en fait que cette symétrisation est d'autant plus régulière que le courant de décharge est plus important.

Quand il y a symétrisation de la décharge en étincelle en un point de fonctionnement, l'effet d'une variation importante de température est alors, comme on le constate expérimentalement, symétrique sur les deux décharges. Tout se passe comme si la variation de résistance interne DZ d'une décharge était opposée à celle de l'autre. Parallèlement, plus le courant de décharge est important et plus, pour une même variation de température, la valeur absolue de $\dfrac{DZ}{Z}$ est faible.

Il apparaît donc possible de compenser en température, à partir d'une plage de fonctionnement choisie préalablement (température - concentration) une décharge par une autre décharge en rendant l'ensemble "symétrique".

La sonde électrique à ionisation permettant la mesure proportionnelle de la concentration en oxygène dans un gaz composite de combustion selon l'invention comporte deux électrodes dont l'une est soumise à une haute tension électrique, le courant électrique circulant entre les deux électrodes étant tel que les décharges électriques successives apparaissent entre les électrodes par un phénomène de relaxation libre, et soient des décharges en étincelle lumineuses et bruyantes. Les deux électrodes sont montées de façon à former un condensateur électrique de capacité importante supérieure à 10 pF et de préférence comprise entre 10 et 100 pF. La capacité importante de ce condensateur interélectrode est capable de fournir une puissance électrique suffisante pour l'obtention de décharges en étincelle successives au cours desquelles la variation de la résistance électrique présente une pente négative. On utilise donc selon l'invention des courants de crêtes relativement importants de l'ordre de quelques milliampères de façon à se trouver toujours en dehors du régime de décharge Corona et à obtenir effectivement des décharges en étincelle caractérisées par des températures de charges électriques très élevées supérieures à 10.000°K et souvent voisines de 20 à 30.000°K. L'indépendance de la mesure par rapport aux effets de température résulte en grande partie de cette caractéristique des décharges en étincelle.

Par ailleurs, selon l'invention, les deux électrodes sont de préférence constituées par deux éléments munis de pointes en saillie à rayon de courbure légèrement différent se faisant face et légèrement écartées l'une de l'autre de façon à obtenir des décharges électriques stables et symétrisées.

Les deux éléments constituant les électrodes de la sonde selon l'invention peuvent comporter une pluralité de pointes effilées se faisant face. Dans une variante, les deux éléments sont réalisés chacun sous la forme d'un segment de fil métallique, les deux fils étant alignés selon une même direction.

Grâce à l'obtention d'une décharge entièrement symétrisée de type pointe-pointe et aux caractéristiques particulières des décharges en étincelle utilisées, on s'affranchit totalement de l'effet de température.

Dans un autre mode de réalisation de l'invention, chacun des deux éléments constituant les électrodes comprend une portion munie d'au moins une pointe en saillie et une portion sensiblement plane perpendiculaire à ladite pointe et exempte de pointe. Les deux éléments sont montés de façon que la portion exempte de pointe d'un élément se trouve en face de la portion munie d'une pointe de l'autre élément, l'ensemble engendrant alors deux décharges symétriques.

Dans une variante, les deux portions de chaque élément sont distinctes et reliées en parallèle dans le circuit d'alimentation. Un tel ensemble de deux décharges symétriques montées en parallèle (push-pull) fait que l'effet de température sur l'une des deux, compense celui sur l'autre et donne en sortie un courant de décharge automatiquement compensé de l'effet de température.

L'une des électrodes est de préférence soumise à une haute tension positive ou négative peu supérieure au potentiel d'ionisation de l'oxygène.

De préférence, la pointe de l'électrode de polarité négative présente un rayon de courbure plus faible que la pointe de l'électrode de polarité positive est recueilli.

L'alimentation haute-tension est choisie de préférence telle que la fréquence des décharges successives soit comprise entre environ 100 Hz et 10 KHz.

La sonde de l'invention comprend en outre de préférence des moyens de régulation agissant sur l'alimentation haute tension de façon que le rapport haute tension/courant, ou la haute tension, ou le courant délivré soit maintenu à une valeur constante. La haute tension d'alimentation reliée à l'une des électrodes est ainsi asservie au fonctionnement de la sonde par l'intermédiaire du courant délivré ou du rapport haute tension/courant. Il en résulte un fonctionnement analogue à un phénomène de relaxation libre, les décharges en étincelle se produisant successivement et de façon autonome sous la simple action de la haute tension appliquée.

La mesure de la concentration en oxygène recherchée peut se faire soit en mesurant la valeur moyenne du courant apparaissant entre les deux électrodes ou la valeur moyenne de la haute tension appliquée, soit en mesurant la fréquence des décharges électriques entre les deux électrodes.

Dans un mode de réalisation dans lequel la régulation de la haute tension assure une valeur constante pour le courant moyen délivré par l'une des électrodes, un filtre passe bas est monté entre l'une des électrodes et la masse de façon à délivrer une tension proportionnelle à la valeur moyenne du courant d'étincelle apparaissant dans les décharges successives. Un amplificateur d'erreur délivre un signal pour ajuster la haute tension d'alimentation de l'autre électrode lorsque la tension précitée proportionnelle à la valeur moyenne du courant d'étincelle est différente d'une tension de référence prédéterminée.

Lorsque la régulation se fait au contraire de façon à maintenir constant le rapport haute tension/courant la comparaison est faite entre la tension proportionnelle à la valeur moyenne du courant d'étincelle et la tension apparaissant entre les deux électrodes lors des décharges successives.

Dans un mode de réalisation avantageux, la haute tension d'alimentation comporte un transformateur délivrant un signal sinusoïdal d'amplitude variable en fonction d'impulsions de courant de commande. Des moyens sont prévus afin d'ajuster automatiquement la fréquence des impulsions de courant de commande à la fréquence de résonance du transformateur, laquelle peut varier en fonction des conditions de température. Ces moyens d'ajustement automatique comprennent de préférence un circuit d'asservissement de fréquence en phase (phase lock-loop PLL) comportant un oscillateur interne dont la fréquence varie en fonction de la différence de phase entre ses deux entrées. Un circuit diviseur est en outre connecté au circuit d'asservissement de fréquence en phase, lequel reçoit sur l'une de ses entrées les impulsions de courant et sur son autre entrée la sortie du circuit diviseur. Par ailleurs, on utilise au moins l'une des sorties codées du circuit diviseur pour commander le rapport cyclique des impulsions de courant pilotant le transformateur. De cette manière, on réalise un asservissement assurant une fréquence fixe du signal sinusoïdal issu du transformateur quelle que soit la température des bobinages du transformateur.

En général, la haute tension d'alimentation fournit une tension continue dont le niveau est ajusté comme il vient d'être indiqué. Dans une variante il est cependant possible d'utiliser ue haute tension d'alimentation adaptée pour fournir un courant alternatif engendrant alors automatiquement une décharge à chaque alternance.

Dans un mode de réalisation avantageux de la sonde selon l'invention, celle-ci comprend une électrode centrale dont l'extrémité est en forme de pointe connectée à la haute-tension électrique et noyée dans un manchon intérieur en matériau réfractaire électriquement isolant à haute température. Un élément métallique entoure le manchon intérieur et se trouve disposé coaxialement tout en étant relié à la terre de façon à constituer un anneau de garde récupérant les courants électriques de fuite. Une électrode extérieure comportant une pointe coaxiale à celle de l'électrode centrale et légèrement écartée de cette dernière est fixée sur le fond d'un organe conducteur en forme de capot perforé par exemple cylindrique, prolongé par un connecteur noyé dans un manchon extérieur en matériau électriquement isolant et disposé de façon coaxiale à l'électrode centrale. La fixation de la sonde à l'intérieur d'une enceinte contenant les gaz de combustion à analyser se fait alors de préférence par des moyens solidaires du manchon extérieur tels que par exemple une bride qui peut être vissée sur une paroi délimitant ladite enceinte.

L'invention sera mieux comprise à l'étude de la description détaillée de quelques modes de réalisation, description faite à titre nullement limitatif et illustrée par les dessins annexés, sur lesquels :

la fig. 1 illustre les variations du courant délivré sur une électrode d'une cellule à décharge dans un gaz en fonction du potentiel appliqué;

la fig. 2 montre une sonde selon l'invention;

la fig. 3 montre une variante d'une sonde selon l'invention;

la fig. 4 illustre un schéma électrique d'une sonde selon l'invention dans laquelle la mesure se fait en maintenant $V_{HT}/I_{HT}$ constant;

la fig. 5 illustre un schéma électrique d'une sonde selon l'invention dans laquelle la mesure se fait en maintenant constant le courant d'alimentation haute-tension $I_{HT}$;

la fig. 6 illustre un schéma électrique d'une sonde selon l'invention dans laquelle la mesure se fait en maintenant constant la tension d'alimentation $V_{HT}$;

la fig. 7 illustre une variante de schéma électrique pour une mesure où le courant $I_{HT}$ est maintenu constant;

la fig. 8 montre une courbe des variations de la tension de sortie par rapport à la tension d'entrée de l'alimentation;

la fig. 9 illustre un mode de réalisation d'une alimentation haute-tension;

la fig. 10 montre en fonction du temps les signaux apparaissant en certains points du schéma de la fig. 9;

la fig. 11 illustre un schéma électrique d'une sonde selon l'invention dans laquelle la mesure se fait en maintenant le rapport tension/courant constant;

la fig. 12 illustre un schéma électrique d'une sonde selon l'invention dans laquelle la mesure se fait à tension constante;

la fig. 13 est une vue en coupe d'une variante de sonde selon l'invention.

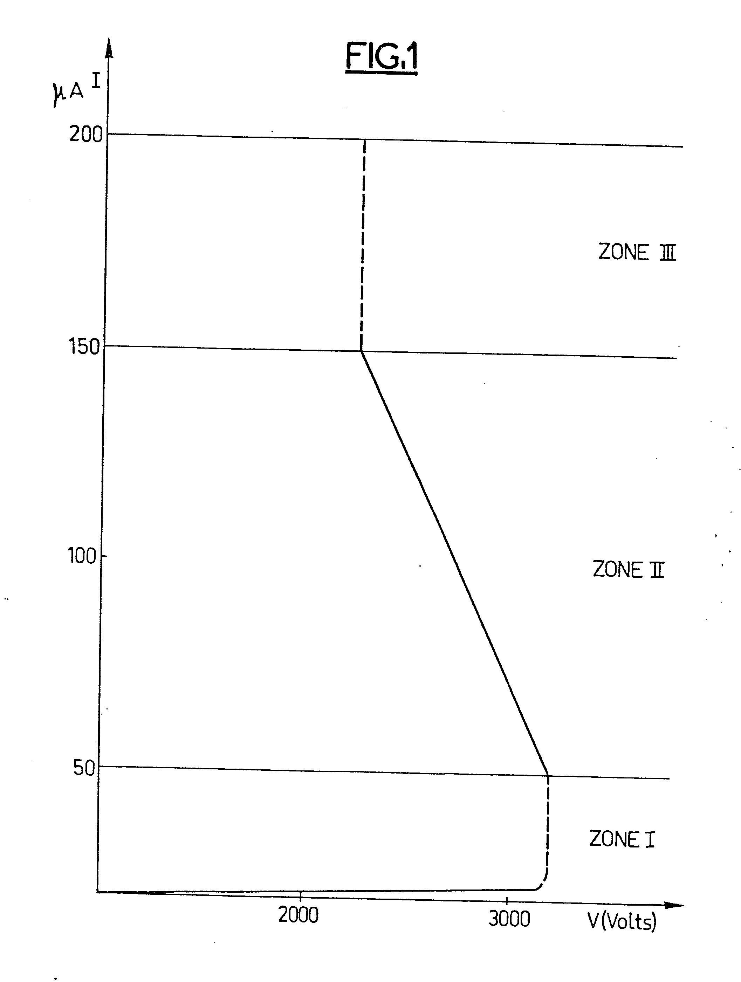

On voit sur la fig. 1 que dans une première zone I où la décharge est du type Corona, la pente de la caractéristique tension/courant est très faible et positive. Dans la zone II au contraire la décharge devient une décharge bruyante "en étincelle" dont la caractéristique tension/courant c'est-à-dire la résistance électrique présente une pente importante et négative : une augmentation du potentiel appliqué entraîne une diminution du courant délivré. La présente invention utilise ce phénomène de décharge en étincelle à pente négative et opère donc dans la zone II.

Efin, dans la zone III la décharge se fait sous forme de points lumineux (glow) et la caractéristique présente une pente quasi-infinie.

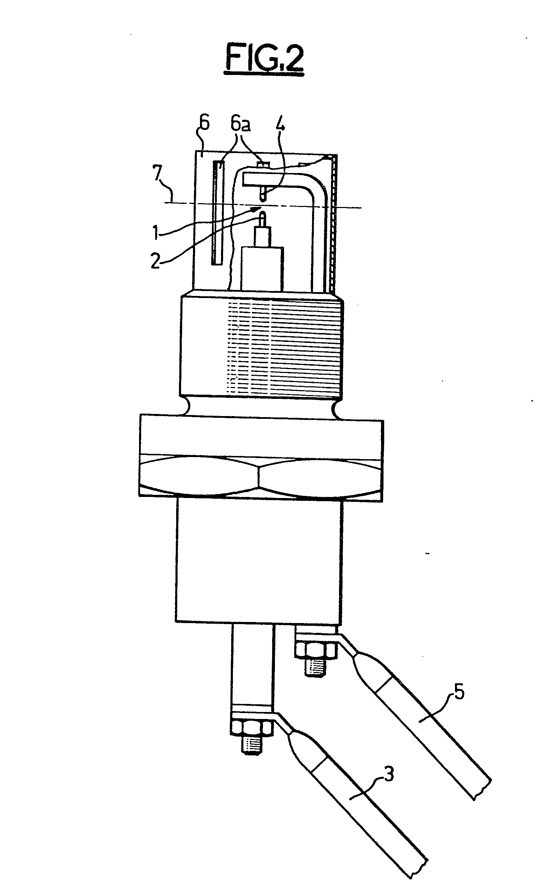

Dans le mode de réalisation représenté schématiquement sur la fig. 2, la sonde qui se trouve placée dans le trajet des gaz à analyser comporte une cellule à ionisation unique 1 du type à éclateur munie d'une électrode 2 sensiblement effilée en forme de pointe qui est portée au potentiel positif d'une haute-tension d'alimentation reliée à l'électrode 2 par le fil d'alimentation 3. En face de la pointe effilée de

l'électrode 2 et à un écartement de quelques millimètres se trouve disposée une autre électrode 4 également effilée en forme de pointe et mise à la terre, au potentiel négatif par la connexion électrique 5. Les électrodes en forme de pointes 2 et 4 disposées face à face peuvent être réalisées en métal résistant aux hautes températures et par exemple en nickel-chrome. On peut avantageusement constituer les électrodes 2 et 4 sous la forme de simples fils de très faible diamètre disposés face à face et écartés de quelques millimètres.

L'agencement de ces électrodes sous la forme de la cellule à ionisation représentée sur la fig. 2 peut avantageusement, afin de résister aux fortes températures des gaz de combustion à analyser, s'insérer dans un montage analogue à celui d'une bougie d'allumage pour moteur à combustion interne présentant une importante capacité interne supérieure à environ 10 pF. Un capot métallique de protection 6, comportant des fentes latérales 6a permettant le passage des gaz à analyser, recouvre avantageusement la zone des deux électrodes 2 et 4 afin d'éviter des perturbations éventuelles dans la mesure dues aux vitesses d'écoulement ou à d'éventuelles particules solides se trouvant en suspension dans le mélange gazeux à analyser.

Sur la fig. 2, le plan de référence 7 définit dans cette configuration pointe-pointe, une "symétrisation électrique" de la décharge électrique en arc dans l'espace inter-électrodes. On entend par symétrisation électrique, la séparation en deux zones dans lesquelles les variations d'impédance relatives se compensent mutuellement lors des variations de la densité du gaz à analyser. Bien entendu, le plan 7 n'est pas forcément confondu avec un plan de symétrie géométrique des deux électrodes. Il peut être défini deux espaces d'impédances Z et Z' de part et d'autre du plan de référence 7. La somme des variations d'impédances DZ + DZ' de pente négative diminue à température constante lorsque la concentration d'oxygène dans ces espaces, diminue jusqu'à 0%. Simultanément, cette somme reste quasiment stable dans une large gamme de variations de température du gaz et à concentration d'oxygène constante. En conséquence, les effets de température se trouvent compensés et la sensibilité de la mesure à la concentration d'oxygène optimisée.

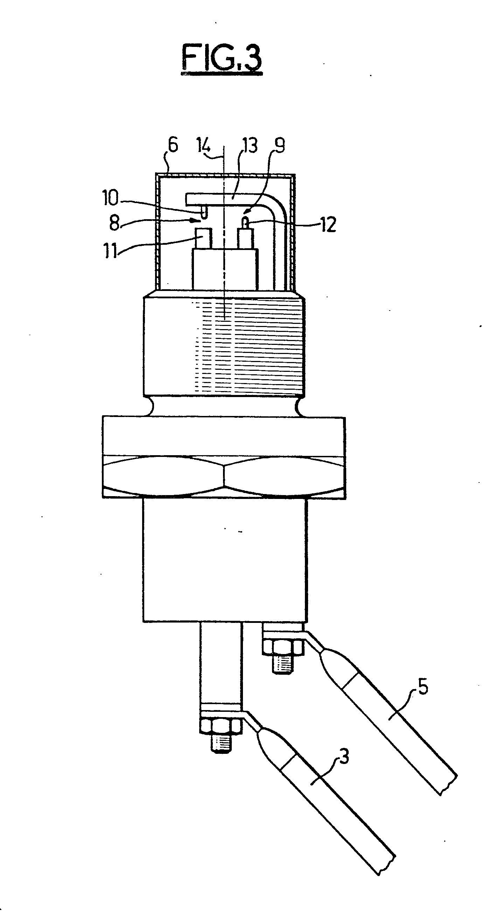

La fig. 3, sur laquelle les éléments identiques portent les mêmes références, représente schématiquement un autre agencement de la sonde de l'invention qui se trouve également placée dans le trajet des gaz à analyser. Cette sonde comporte deux cellules distinctes 8 et 9 à ionisation du type éclateur.

La cellule 8 comporte une pointe effilée 10 reliée à la terre, au potentiel négatif par la connexion électrique 5 et une électrode plane 11 reliée au potentiel positif d'une haute-tension d'alimentation électrique par la connexion 3. Inversement pour la cellule 9, la pointe effilée 12 se trouve connectée au potentiel positif haute-tension par la connexion 3 et l'électrode plane 13 qui lui fait face est connectée au potentiel terre négatif par la connexion 5.

Les matériaux constitutifs de ces deux cellules sont avantageusement les mêmes que ceux utilisés pour la cellule illustrée sur la fig. 2 ainsi que leur agencement sur un corps de bougie d'allumage avec un capot de protection 6.

Sur la fig. 3, le plan de référence 14 sépare les deux cellules à ionisation 8 et 9. Chaque cellule présente respectivement une impédance électrique Z et Z' qui, électriquement dans l'agencement choisi, se trouvent mises en parallèle. La somme des variations d'impédances relatives de pente négative sera :

$$\frac{Dz}{z} = \frac{DZ + DZ'}{Z} \quad \text{avec} \quad \frac{1}{z} = \frac{Z + Z'}{Z\,Z'}$$

$\frac{Dz}{z}$ diminue à température constante lorsque la concentration d'oxygène dans les espaces des deux cellules diminue. Simultanément, cette somme reste quasiment stable à concentration d'oxygène constante, dans une large gamme de variations de température du gaz à analyser. De la même manière que pour la cellule de la fig. 2, cet agencement dit tête-bêche ou push-pull est donc compensé et la mesure de concentration d'oxygène optimisée.

Le traitement des signaux électriques fournis par la cellule à ionisation à éclateur de la fig. 2 ou 3 peut être réalisé de toute manière appropriée. C'est ainsi que l'on pourra mesurer la valeur moyenne du courant apparaissant sur l'une des électrodes. On pourra également mesurer la fréquence des décharges électriques de la cellule à ionisation. Les variations de fréquence pourront être mesurées par un compteur

digital par rapport à une référence de temps et fourniront une mesure de la teneur en oxygène se présentant sous forme digitale.

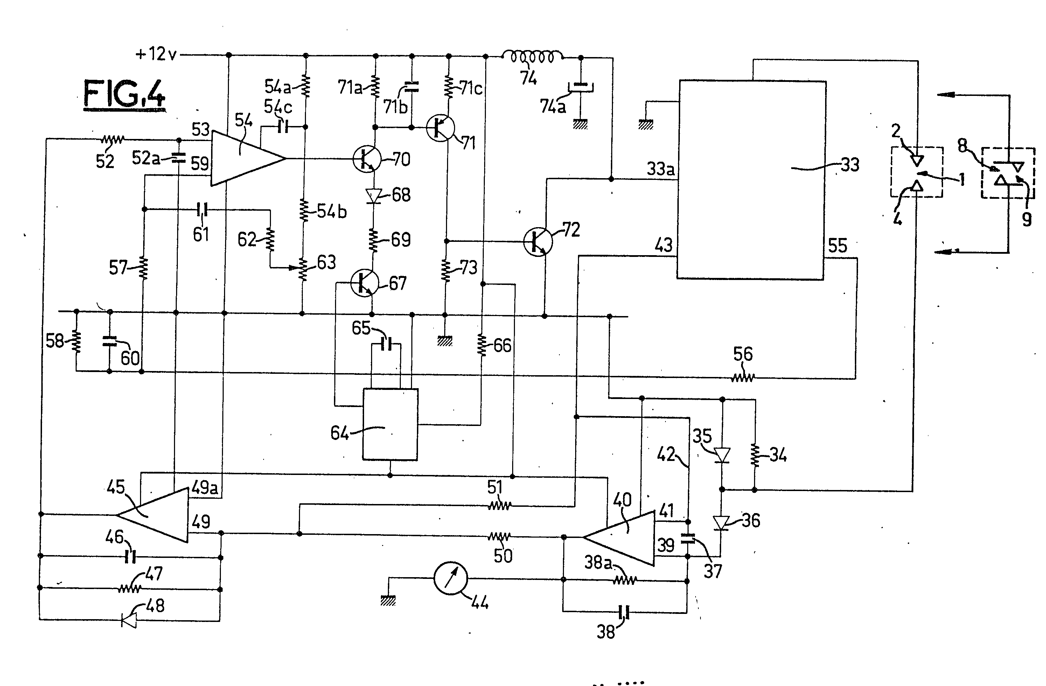

La fig. 4 illustre à titre d'exemple un circuit électrique qui pourrait être utilisé dans une sonde utilisant une cellule à ionisation telle que celle représentée sur la fig. 2 ou 3 dans laquelle le traitement des signaux se fait par détection de la valeur moyenne du courant, la haute-tension d'alimentation étant régulée de façon que le rapport $V_{HT}/I_{HT}$ soit maintenu constant.

Sur cette figure, on retrouve les cellules à ionisation 1, 8 et 9 du type à éclateur telles que représentées sur la fig. 2 ou 3 de manière plus détaillée. L'électrode 2 est reliée à l'alimentation à haute-tension 33. L'électrode 4 délivre un courant pulsé faisant apparaître aux bornes de la résistance 34 une tension qui après avoir été convenablement redressée par les diodes 35 et 36 et filtrée par les condensateurs 37 et 38 est appliquée à l'une des entrées 39 de l'amplificateur 40 dont le gain est fixé par la résistance de contre-réaction 38a. L'amplificateur 40 reçoit, en outre, sur sa deuxième entrée 41 par la connexion 42 une tension continue proportionnelle à la haute-tension d'alimentation provenant de la sortie 43 de l'alimentation 33.

Le galvanomètre 44 placé à la sortie de l'amplificateur 40 permet de mesurer la valeur moyenne du courant apparaissant sur la cellule à ionisation, valeur moyenne qui est proportionnelle à la concentration en oxygène recherchée. L'amplificateur 45 est monté en intégrateur au moyen du condensateur 46 et de la résistance de contre-réaction 47, convenablement protégé par la diode 48 reçoit sur sa première entrée 49 une tension proportionnelle au rapport $V_{HT}/I_{HT}$ par l'intermédiaire du diviseur de tension constitué par la résistance 50 reliée à la sortie de l'amplificateur 40 et la résistance 51 reliée à la sortie 43 de l'alimentation haute tension 33. La deuxième entrée 49a de l'amplificateur 45 est reliée à la masse.

La tension continue issue de l'amplificateur intégrateur 45 est appliquée à travers la résistance 52 à l'entrée 53 de l'amplificateur d'erreur 54, d'éventuels parasites étant filtrés par le condensateur 52a.

La haute tension issue de la sortie 55 de l'alimentation haute tension 33 est appliquée par l'intermédiaire du diviseur de tension constitué par les résistances 56, 57 et 58 à la deuxième entrée 59 de l'amplificateur d'erreur 54, le condensateur 60 jouant le rôle de filtre. Le condensateur 61, la résistance 62 en série et le potentiomètre 63, sont montés entre l'entrée 59 de l'amplificateur 54 et l'alimentation de l'ensemble du circuit et permettent de régler la rapidité de réponse de la boucle de régulation.

Le circuit intégré 64, monté par l'intermédiaire du condensateur 65 et de la résistance 66, constitue un circuit oscillant délivrant des impulsions au transistor NPN 67 agissant comme un interrupteur et dont le collecteur est relié par la diode 68 et la résistance 69 à l'émetteur du transistor NPN 70. Le transistor 70 est relié par sa base à la sortie de l'amplificateur d'erreur 54 et délivre par son collecteur sur la base du transistor PNP 71 des impulsions de courant modulées en amplitude par la tension issue de l'amplificateur d'erreur 54. On notera que ce dernier est monté par l'intermédiaire des résistances 54a et 54b et du condensateur 54c.

Le transistor 71 monté de manière classique par l'intermédiaire de la résistance 71a et du condensateur 71b reliés à sa base en parallèle, ainsi que de la résistance 71c reliée à son émetteur, délivre par son collecteur un courant qui alimente la base du transistor de puissance NPN 72 par l'intermédiaire de la résistance 73 reliée à la masse. Les impulsions provenant du collecteur du transistor 72 se comportant en générateur de courant sont appliquées à l'entrée 33a de l'alimentation haute tension 33. On notera que le transistor 72 ne fonctionne pas en régime de saturation et permet d'obtenir la régulation de la haute tension par la modulation en amplitude du courant de l'impulsion d'excitation apparaissant sur son collecteur.

Le circuit se complète par une bobine de self-induction de protection 74 et un condensateur électrolytique de découplage 74a reliés à l'entrée 33a.

L'alimentation en haute tension 33, qui dans l'exemple illustré est un circuit imprimé, comprend un transformateur de puissance non représenté constituant un circuit oscillant qui est excité par les impulsions courtes provenant du transistor 72.

On voit finalement que l'ensemble du circuit se décompose en un circuit de puissance, un circuit de modulation et pilotage et un circuit de mesure de la haute tension et d'amplification du signal d'erreur.

Le circuit de puissance est constitué principalement par les deux transistors 71 et 72 et l'alimentation à haute tension 33. Le circuit de modulation et de pilotage comprend l'oscillateur 64 et les transistors 67 et 70. Le circuit de mesure de la haute tension et d'amplification d'erreur comprend les amplificateurs 40 et 45 ainsi que l'amplificateur d'erreur 54. L'ensemble constitue un système de régulation permettant de maintenir constant le rapport $V_{HT}/I_{HT}$.

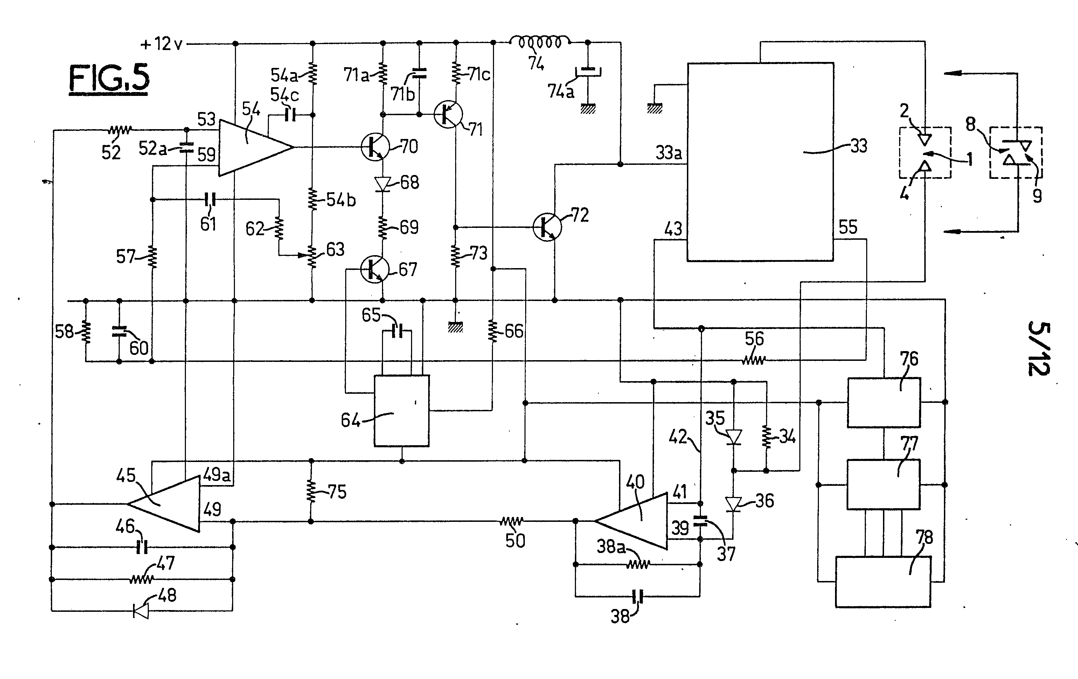

Le schéma de la fig. 5, sur lequel les mêmes éléments portent les mêmes références que sur la fig. 4, montre un système de régulation permettant de maintenir constant le courant $I_{HT}$ fourni par l'alimentation à haute tension. Dans ce mode de réalisation, l'entrée 49 de l'amplificateur 45 ne reçoit plus comme précédemment un signal basse tension continu proportionnel à la haute tension délivrée par l'alimentation 33 et provenant de la sortie 43. Dans ce mode de réalisation au contraire le courant est maintenu constant par la résistance 75 branchée en parallèle entre la tension d'alimentation du circuit et l'entrée 49.

La mesure pourrait se faire comme dans le mode de réalisation de la fig. 4 par la valeur moyenne du courant apparaissant sur l'électrode en forme de pointe 4 de la cellule à ionisation 1 en reprenant le même schéma que sur la fig. 4. Sur la fig. 5, on a montré une autre variante dans laquelle on mesure au contraire la fréquence des décharges dans la cellule à ionisation 1. Dans cette variante, les impulsions de basse tension apparaissant à la sortie 43 de l'alimentation haute tension 33 sont appliquées directement à un circuit de mise en forme 76 du type classique éliminant les parasites puis à une bascule 77 permettant le comptage des impulsions qui sont ensuite affichées sur un dispositif 78 qui peut donner directement le pourcentage d'oxygène dans le mélange gazeux à analyser.

On comprendra bien entendu que la mesure de la fréquence des décharges électriques dans la cellule à ionisation pourrait également être employée dans le schéma de régulation de la fig. 4.

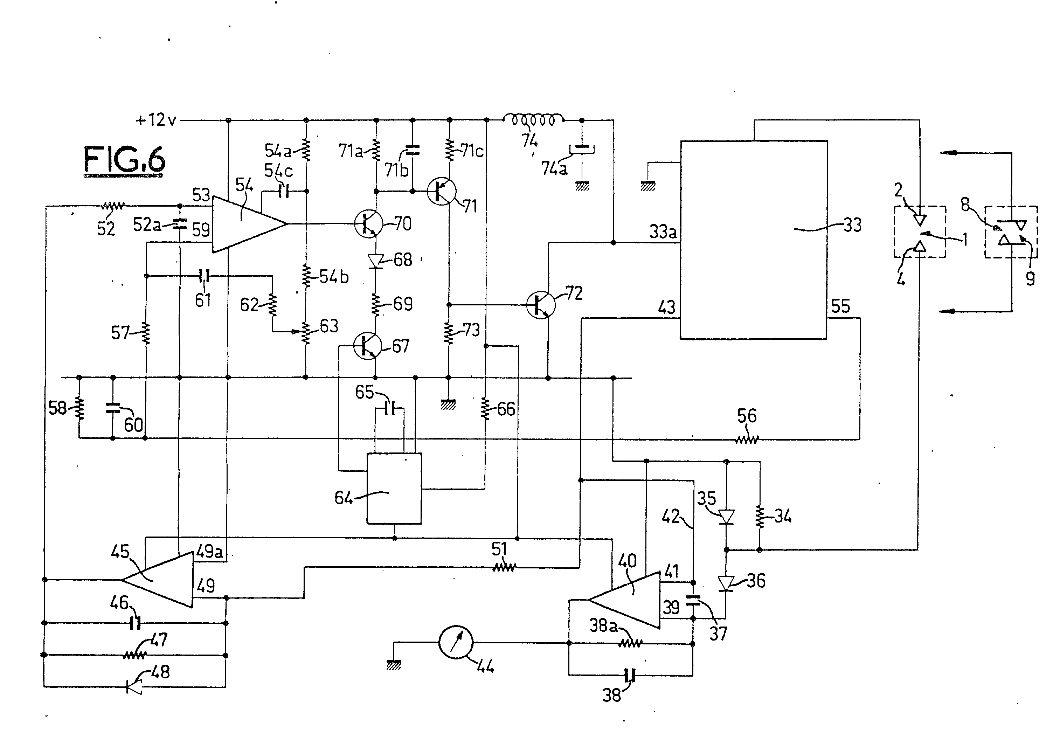

Le schéma de la fig. 6 sur lequel les mêmes éléments portent les mêmes références que sur les fig. 4 et 5 montre un système de régulation permettant de maintenir constant la tension $V_{HT}$ fournie par l'alimentation à haute-tension. Ce mode de réalisation ne se différencie de celui illustré sur la fig. 4 que par la suppression de la jonction contenant la résistance 50 visible sur la fig. 4 et qui permettait de fournir à l'entrée 49 de l'amplificateur intégrateur 45 un signal représentatif de la valeur moyenne du courant apparaissant sur la cellule à ionisation.

Dans le mode de réalisation de la fig. 6, l'entrée 49 de l'intégrateur 45 reçoit donc exclusivement par l'intermédiaire de la résistance 51 reliée à la sortie 43 de l'alimentation haute-tension 33, un signal correspondant à la valeur de la haute-tension $V_{HT}$. La boucle de régulation constituée par l'amplificateur intégrateur 45, l'amplificateur d'erreur 54 ainsi que le circuit de puissance contenant les deux transistors 71 et 72 permet donc d'assurer le maintien constant de la haute-tension $V_{HT}$ à laquelle est soumise l'électrode 2.

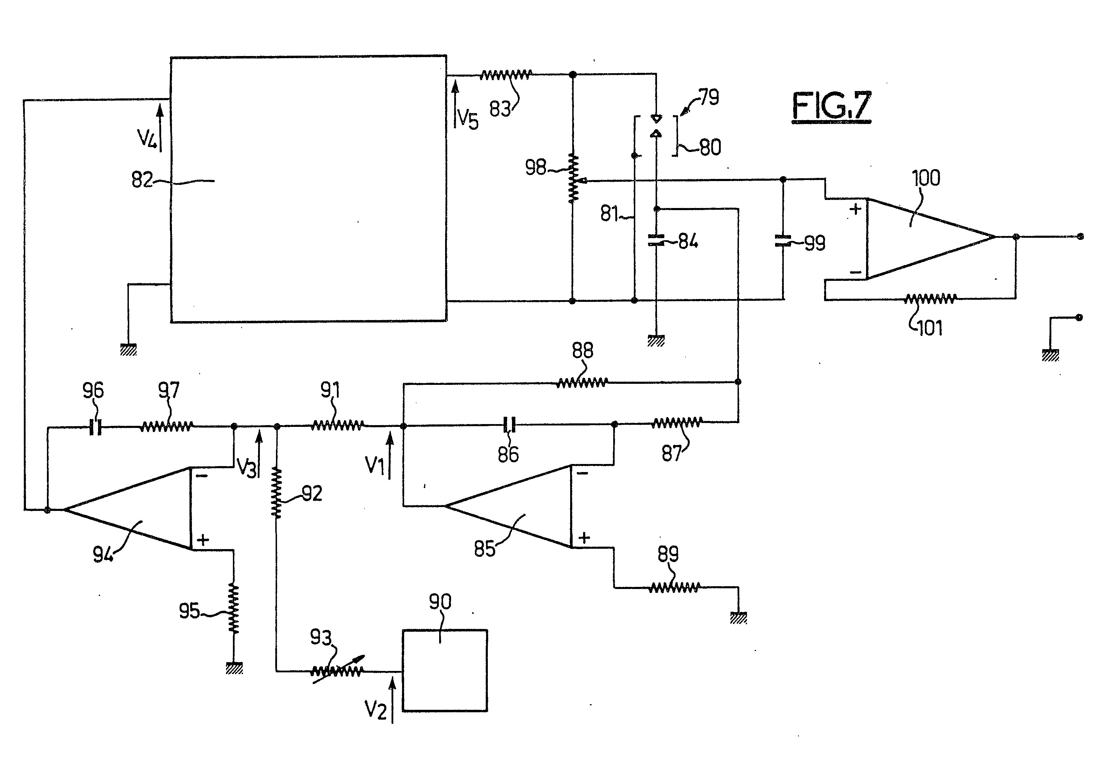

Le schéma électrique de la fig. 7 montre un autre mode de réalisation d'un circuit électrique associé à une sonde selon l'invention et permettant un fonctionnement à courant constant. Sur la fig. 7 on retrouve une cellule à ionisation 79 du type à éclateur, les deux électrodes comportant des pointes en saillie à rayon de courbure différent légèrement écartées l'une de l'autre. Un anneau de garde 80 relié par la connexion 81 à la masse du montage permet en outre de récupérer les courants électriques de fuite.

L'une des électrodes est reliée à l'alimentation haute-tension 82 par l'intermédiaire de la résistance 83. L'autre électrode est reliée au condensateur 84 lui-même connecté à la masse du montage. L'amplificateur opérationnel 85 constitue un amplificateur de courant et se trouve associé dans ce but au condensateur 84, au condensateur 86 monté entre la sortie de l'amplificateur 85 et son entrée négative, la résistance 87 branchée à l'entrée négative de l'amplificateur 85 et la résistance de contre réaction 88 montée en parallèle sur le condensateur 86 et la résistance 87. L'entrée négative de l'amplificateur opérationnel 85 est reliée par l'intermédiaire de la résistance 87 à la deuxième électrode de la cellule à ionisation 79 et reçoit donc un signal correspondant à la valeur moyenne du courant apparaissant sur cette électrode lors des décharges successives en étincelle. L'entrée positive de l'amplificateur opérationnel 85 est par ailleurs reliée par l'intermédiaire de la résistance 89 à la masse.

L'amplificateur de courant comprenant comme il vient d'être dit l'amplificateur opérationnel 85, constitue également un filtre passe-bas qui délivre à sa sortie une tension électrique négative $V_1$ dont la valeur absolue est proportionnelle au courant moyen d'étincelle.

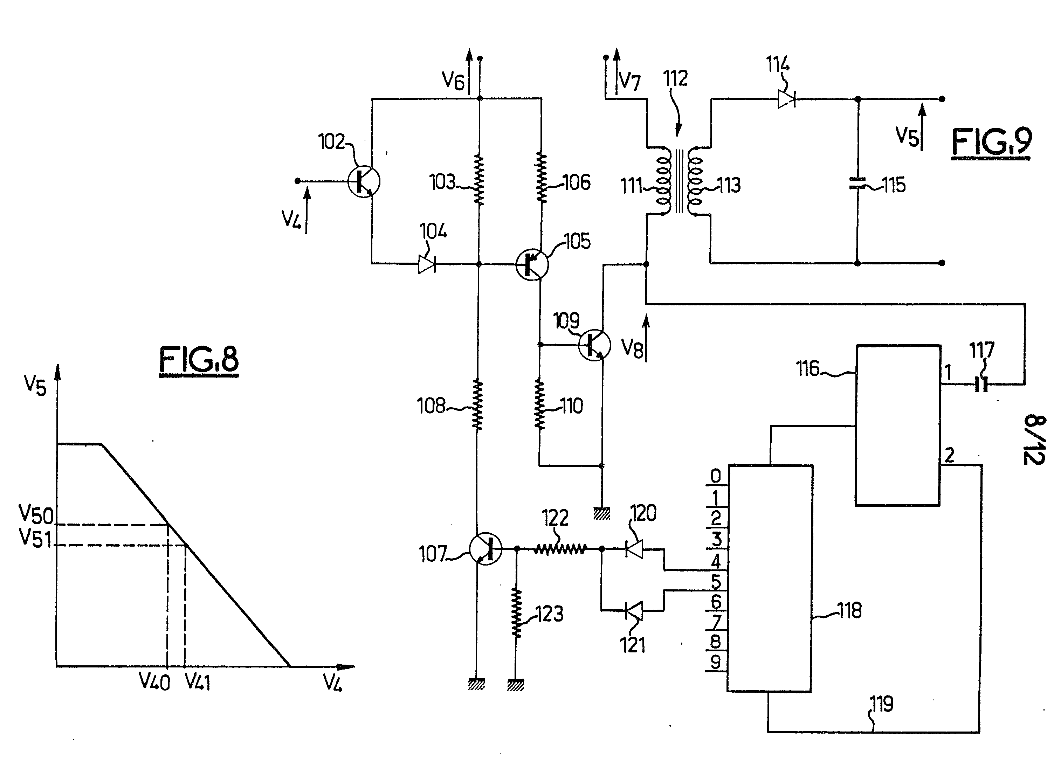

Une source de référence 90 qui peut par exemple comprendre une diode Zener de référence délivre une tension $V_2$. La tension $V_1$ apparaissant à la sortie de l'amplificateur 85 est soustraite de la tension de référence $V_2$ grâce au diviseur de tension constitué par les résistances 91, 92 et la résistance variable 93. Ces différentes résistances sont choisies de telle sorte que la tension $V_3$ qui en résulte et qui constitue la "tension d'erreur" soit nulle quand le courant moyen d'étincelle est à sa valeur nominale. La tension d'erreur $V_3$ est amplifiée par l'amplificateur d'erreur 94 dont l'entrée positive est reliée à la masse par la résistance 95 et qui reçoit la tension $V_3$ sur son entrée négative. L'amplificateur d'erreur 94 est de préférence réalisé sous forme d'amplificateur opérationnel possédant un gain important. Un condensateur 96 et une résistance 97 sont branchés dans la boucle de contre-réaction de l'amplificateur 94 de façon à rendre stable le fonctionnement de ce dernier. La tension d'erreur amplifiée $V_4$ attaque l'alimentation haute-tension 82 qui délivre la tension de sortie $V_5$ selon la loi représentée sur la fig. 8.

La tension aux bornes de la cellule à éclateur 79 est prélevée par le potentiomètre 98. La fraction de tension prélevée est filtrée par le condensateur 99 et délivrée en vue de la mesure directe ou indirecte de la concentration en oxygène à travers l'amplificateur 100 comprenant une résistance de contre-réaction 101 et constituant un adaptateur d'impédance.

On se reportera maintenant à la fig. 8 qui montre les variations de la tension de sortie $V_5$ par rapport à la tension d'entrée $V_4$ pour l'alimentation 82 de la fig. 7. Si le courant moyen dans la cellule à éclateur 79 est trop élevé il en résulte une tension $V_1$ apparaissant à la sortie de l'amplificateur 85 plus négative. La tension $V_3$ est également plus négative. La tension $V_4$ qui est positive augmente et passe de la valeur $V_{40}$ à la valeur $V_{41}$ sur la fig. 8. La tension THT issue de l'alimentation 82 passe donc de la valeur $V_{50}$ à la valeur $V_{51}$ inférieure. Cette diminution de la tension $V_5$ fait baisser la fréquence des étincelles dans la cellule à éclateur 79. Il en résulte également une diminution de la valeur du courant moyen et, compte tenu de la stabilité du système, un état d'équilibre qui correspond à une valeur de la tension $V_3$ minimale en valeur absolue et de préférence nulle. Quand la tension $V_3$ est nulle, la tension $V_1$, et donc le courant moyen, est proportionnelle à la tension $V_2$ fournie par la source de référence. On voit donc que l'on obtient de la sorte le maintien du courant moyen d'étincelle à une valeur constante. La valeur nominale peut être réglée en agissant sur la valeur de la résistance variable 93.

On notera que le fonctionnement de la sonde dépend essentiellement de l'existence d'une importante capacité interélectrode dans la sonde à éclateur 79. Lors du fonctionnement, lorsque la tension aux bornes de ce condensateur interélectrode atteint la tension de claquage, une étincelle se produit qui décharge ce condensateur et transfère les charges au condensateur 84. Le processus se répète périodiquement et est analogue à un phénomène de relaxation libre.

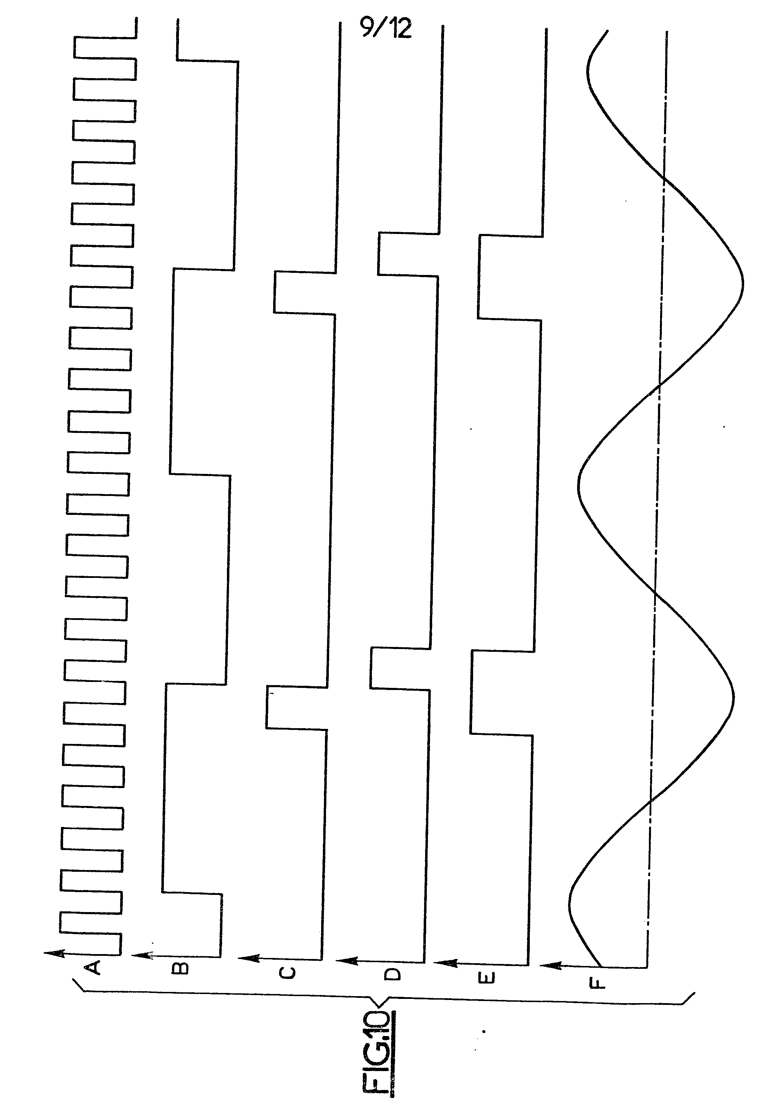

La fig. 9 illustre un mode de réalisation de la haute-tension d'alimentation référencée 82 sur la fig. 7. On retrouve sur la fig. 9 les mêmes références que sur la fig. 7 pour les mêmes tensions.

La tension de commande $V_4$ est transmise par le transistor 102 monté en émetteur suiveur par l'intermédiaire de la résistance 103. L'émetteur du transistor 102 est relié par l'intermédiaire de la diode 104 à la base du transistor 105 dont le collecteur reçoit la tension $V_6$ par l'intermédiaire de la résistance 106. Le transistor de commande 107 est relié par l'intermédiaire de la résistance 108 à la base du transistor 105 tandis que son émetteur est relié à la masse. Le signal issu du collecteur 105 est amené sur la base du transistor 109 monté par l'intermédiaire de la résistance 110 et attaquant par son collecteur l'enroulement primaire 111 du transformateur 112 élévateur de tension. L'enroulement secondaire 113 délivre par l'intermédiaire de la diode 114 et du condensateur de filtrage 115 la tension de sortie $V_5$ redressée et filtrée.

Lors du fonctionnement, le transistor de commande 107 est rendu périodiquement conducteur par des impulsions de fréquence variable et de rapport cyclique fixe. Chaque fois que le transistor 107 est conducteur, la base du transistor 105 est portée sensiblement au potentiel $V_4$ et un courant égal à $(V_6 - V_4/résistance\ 106)$ se développe dans le transistor 105 et dans la base du transistor 109. Le transistor 109 amplifie ce courant qui excite le transformateur 112, lequel répond en délivrant un signal pratiquement sinusoïdal de même fréquence. L'amplitude de ce signal sinusoïdal est proportionnelle à l'amplitude de l'impulsion de courant apparaissant aux bornes de la cellule à éclateur 79. A la suite de l'élévation de tension due au transformateur 112, le signal apparaissant sur l'enroulement secondaire 113 atteint 10 à 12 kV de tension de crête. La tension redressée filtrée $V_5$ se trouve pratiquement proportionnelle à l'amplitude de crête du signal sinusoïdal et donc à l'amplitude des impulsions de courant apparaissant sur l'électrode de la cellule à éclateur 79.

Le rendement maximal du système est obtenu lorsque la fréquence du signal est égale à la fréquence propre de résonance du transformateur 112. On constate cependant dans la pratique que cette fréquence propre varie, notamment en fonction des conditions de température. En l'absence de toute correction, le signal sinusoïdal serait déphasé et pour une même amplitude de signal il serait nécessaire d'appliquer une impulsion de courant plus grande, ce qui se traduirait par un mauvais rendement.

Le circuit électrique comprend donc en outre un circuit d'asservissement de fréquence en phase 116 (phase lock-loop PLL) possédant un oscillateur interne dont la fréquence varie avec la différence de phase existant entre les signaux pénétrant sur ses entrées 1 et 2. A titre d'exemple on pourra utiliser un circuit standard de type CD 4046. L'entrée 1 est reliée par l'intermédiaire du condensateur 117 à l'enroulement primaire 111 du transformateur 112.

Le signal de sortie de l'oscillateur interne du circuit 116 est amené à l'entrée d'un circuit diviseur 118 qui dans l'exemple illustré est un diviseur par 10 par exemple un circuit standard de type CD 4017. Le diviseur 118 délivre à sa sortie un signal carré de fréquence voisine de la fréquence de résonance du transformateur 112. La sortie du diviseur 118 est reliée par la connexion 119 à l'entrée 2 du circuit d'asservissement de fréquence en phase 116.

Les sorties codées 4 et 5 du circuit diviseur 118 sont en outre utilisées pour commander le transistor 107 par l'intermédiaire des diodes 120 et 121 et des résistances 122 et 123.

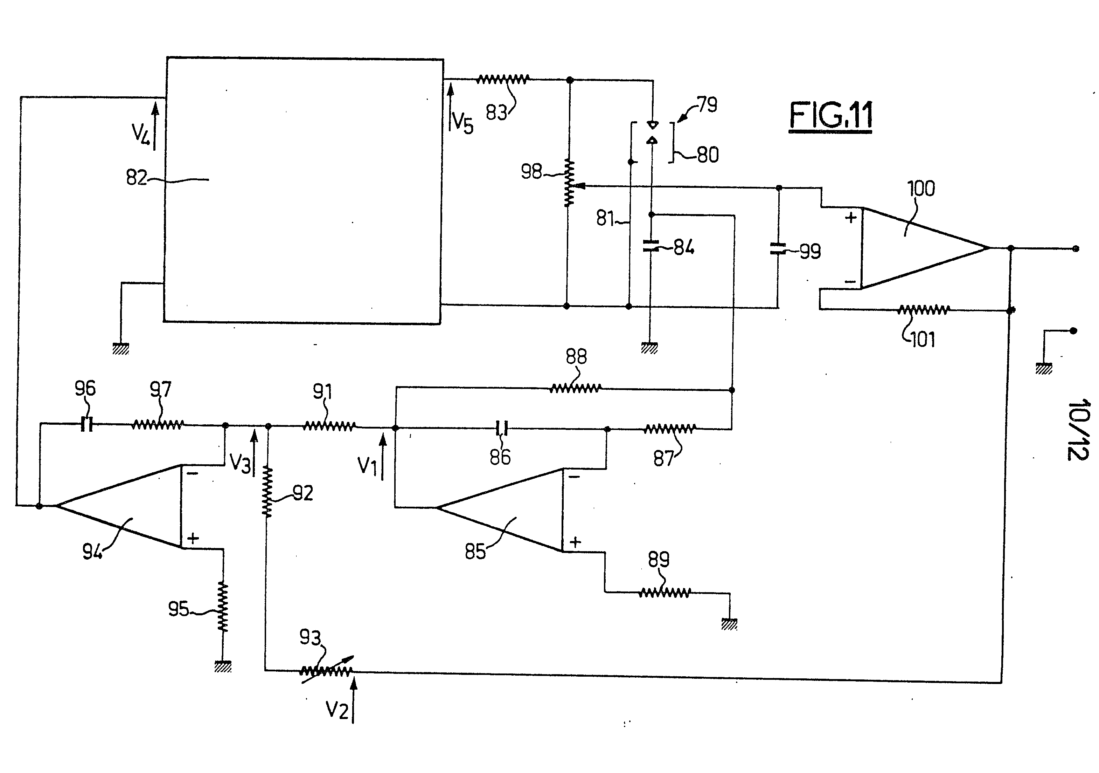

On va décrire maintenant le fonctionnement de cet asservissement en se référant aux signaux en fonction du temps illustrés sur la fig. 10. La fig. 10A montre le signal de sortie du circuit d'asservissement de fréquence en phase 116. La fréquence de ce signal émis par l'oscillateur interne du circuit 116 est choisie égale à dix fois la valeur nominale de résonance du transformateur 112. Le diviseur 118 délivre à sa sortie le signal carré de la fig. 10B dont la fréquence est voisine de la fréquence de résonance du transformateur 112. Le diviseur 118 délivre également sur ses sorties 0 à 9 les dix états codés de son compteur modulo 10 interne. Les états des sorties 4 et 5 utilisés pour la commande du transistor 107 sont représentés respectivement sur les fig. 10C et 10D. On notera que les signaux codés des sorties 4 et 5 encadrent le point médian de la période du signal de sortie du diviseur 118 représenté sur la fig. 10B. La combinaison de ces deux signaux apparaissant à la sortie du branchement en parallèle des deux diodes 120 et 121 illustrée sur la fig. 10E se présente donc sous la forme d'un signal de durée double, situé exactement à la demi-période du signal de sortie du diviseur 118.. Ce signal présente un rapport cyclique indépendant de la fréquence. En cas de déphasage entre le signal délivré par le transformateur 112 et le signal carré de sortie du diviseur 118 illustré sur la fig. 10B, la fréquence de l'oscillateur interne du circuit 116 se trouve modifiée par la boucle de retour 119. L'état d'équilibre correspond à un déphasage nul qui intervient lorsque la fréquence du signal de sortie du diviseur 118 est égale à la fréquence propre de résonance du transformateur 112. Les impulsions de rapport cyclique indépendant de la fréquence illustrées sur la fig. 10E permettent donc de commander le transistor 107 en le rendant périodiquement conducteur comme il a été précédemment indiqué. Le courant amplifié qui en résulte à la sortie du transistor 109 provoque l'apparition d'un signal sinusoïdal de même fréquence correspondant à la tension $V_7$ sur la fig. 9 et illustré sur la fig. 10F.

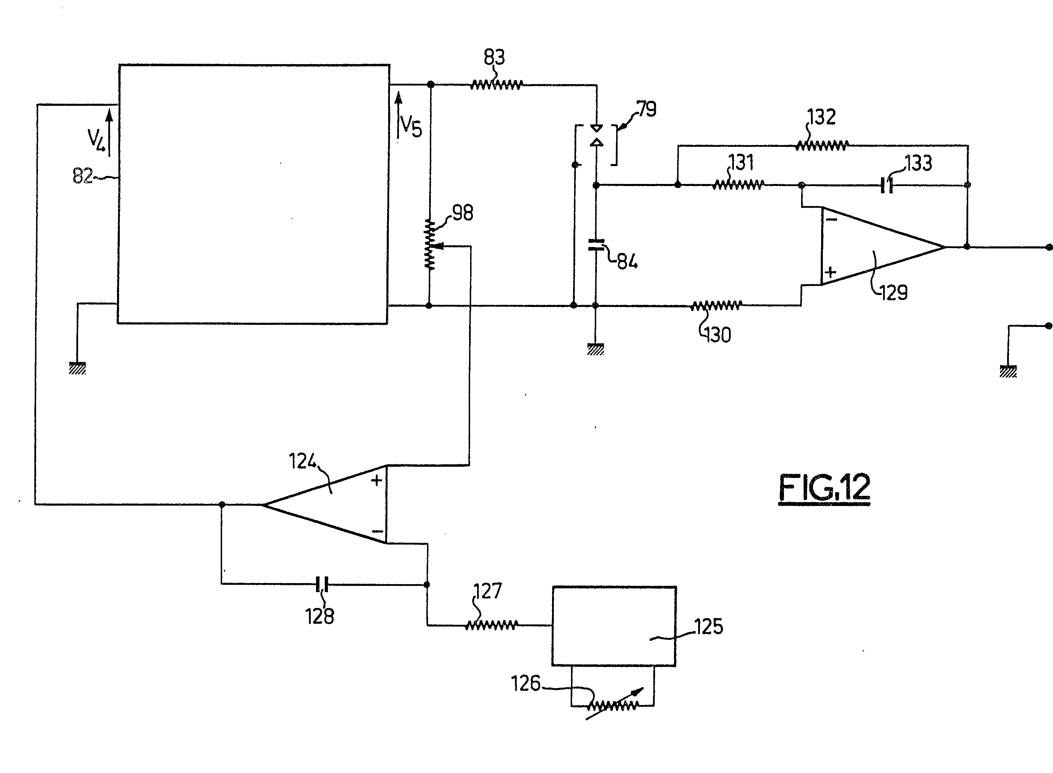

La fig. 11 illustre une variante de réalisation dans laquelle les éléments identiques portent les mêmes références que sur la fig. 7 mais où le fonctionnement se fait en maintenant constant le rapport tension/courant. On notera que l'alimentation haute-tension 82 est identique. La seule différence par rapport au circuit de la fig. 7 est la suppression de la source de référence 90. Dans ce mode de réalisation, la résistance variable 93 est directement reliée à la sortie de l'amplificateur 100. La tension $V_2$ est donc proportionnelle à la tension d'alimentation $V_5$ développée aux bornes du potentiomètre 98 et donc aux bornes de la cellule à éclateur 79. La valeur exacte du rapport $V_{HT}/I_{HT}$ est déterminée par le pont de résistances 91, 92 et 93.

Dans ce mode de réalisation, l'amplificateur 100 fournit une tension électrique proportionnelle à la concentration d'oxygène, la cellule à éclateur 79 étant alimentée avec un rapport tension/courant constant.

Dans la variante illustrée sur la fig. 12 où les éléments identiques portent les mêmes références que sur les fig. 7 et 11, le fonctionnement se fait en maintenant la tension d'alimentation constante. L'alimentation haute-tension 82 est du même type que pour les modes de réalisation précédents. Une fraction de la haute-tension d'alimentation $V_5$ est prélevée par le potentiomètre 98 et alimente l'entrée positive de l'amplificateur 124. Une source de référence 125 délivre une tension de référence dont la valeur dépend de la résistance variable 126 et qui est amenée sur l'entrée négative de l'amplificateur 124 par l'intermédiaire de la résistance 127. Le condensateur 128 monté dans la boucle de contre-réaction de l'amplificateur 124 en combinaison avec la résistance 127 permet d'obtenir un fonctionnement stable de l'amplificateur 124 qui réalise donc la soustraction de la fraction de la haute-tension $V_5$ prélevée par le potentiomètre 98 et de la tension de référence provenant de la source 125.

Le signal de sortie de tension $V_4$ issu de l'amplificateur 124 attaque l'alimentation 82.

Le courant moyen d'étincelle dans la cellule à éclateur 79 est prélevé par l'amplificateur 129 dont l'entrée positive est reliée à la masse par l'intermédiaire de la résistance 130 et qui est connectée à l'une des électrodes de la cellule 79 par l'intermédiaire de la résistance 131 et du montage en contre-réaction de la résistance 132 et du condensateur 133.

La tension délivrée à la sortie de l'amplificateur 129 est proportionnelle au courant moyen d'étincelle.

On notera que dans les différents modes de réalisation qui viennent d'être décrits et qui sont illustrés sur les fig. 7, 11 et 12, c'est la valeur de la résistance 83 qui permet de fixer la fréquence des décharges en étincelle dans la cellule à éclateur 79. Pour améliorer le résultat de la mesure, on utilise de préférence une résistance 83 de valeur telle que la fréquence des étincelles soit au moins supérieure à 100 Hz. Toutefois, pour que les charges puissent s'évacuer convenablement après chaque étincelle, on fait en sorte que la fréquence de ces étincelles reste inférieure à 10 kHz.

Dans tous les modes de réalisation précédemment décrits, la haute-tension d'alimentation $V_5$ est une tension redressée et filtrée, c'est-à-dire une tension continue, les étincelles se produisant par un phénomène de relaxation libre de manière automatique.

Dans une variante, il est possible d'alimenter la cellule à éclateur 79 au moyen d'une tension alternative de fréquence constante permettant l'obtention d'une décharge en étincelle à chaque alternance. Il suffit alors dans un tel mode de réalisation de modifier l'alimentation haute-tension 82 représentée sur la fig. 9 en supprimant la diode 114 et le condensateur 115 et de modifier le circuit électrique représenté sur les fig. 7, 11 et 12 en supprimant la résistance 83.

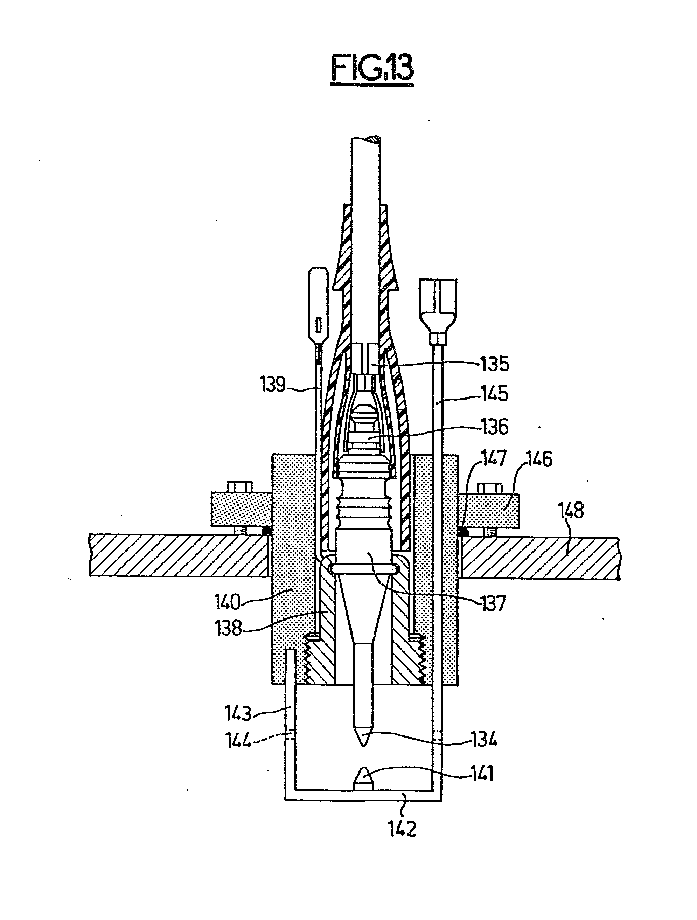

La fig. 13 illustre un mode de réalisation pratique d'une cellule à éclateur pouvant être utilisée dans une sonde de mesure selon l'invention. Telle qu'elle est représentée sur la fig. 13, la cellule comprend une électrode centrale dont l'extrémité 134 est en forme de pointe et qui est reliée à la haute-tension négative par l'intermédiaire du connecteur 135 qui coopère avec l'autre extrémité 136 de l'électrode centrale. L'électrode centrale est noyée dans un manchon intérieur 137 réalisé en matériau réfractaire électriquement isolant à haute température tel que de l'alumine. Un élément métallique 138 formant anneau de garde entoure la partie basse de l'électrode centrale et est relié par la connexion 139 à la masse du montage. L'anneau de garde 138 peut ainsi récupérer les courants électriques de fuite. Un manchon périphérique de fixation 140 réalisé en matériau électriquement isolant, par exemple en amiante, entoure l'ensemble et se trouve fixé, par exemple par sertissage, à la périphérie de l'anneau de garde 138. Une électrode extérieure comportant une pointe 141 disposée de façon coaxiale à la pointe de l'électrode centrale 134 et légèrement écartée de cette dernière est fixée sur le fond 142 d'un capot conducteur réalisé par exemple en acier référencé 143 et présentant des ouvertures 144 pour le passage du gaz à analyser. La partie haute du capot 143 ainsi que le connecteur 145 qui lui est relié se trouvent noyés dans la matière du manchon extérieur 140. Le connecteur 145 permet de récolter le courant apparaissant sur l'électrode 141.

La disposition géométrique de ces différents éléments et en particulier le caractère coaxial du montage, permettent d'obtenir une importante capacité inter-électrodes, supérieure à 10 pF et de préférence comprise entre 10 et 100 pF de façon à obtenir des décharges en étincelle à pente négative qui sont caractéristiques du fonctionnement de la sonde selon l'invention.

On notera en outre que le rayon de courbure de la pointe 134 reliée à la haute-tension négative est plus petit que le rayon de courbure de la pointe 141.

La fixation de l'ensemble se fait au moyen d'une bride 146 solidaire de la périphérie du manchon externe 140 et fixée par vis avec interposition d'un joint 147 sur la paroi 148 d'une enceinte contenant le gaz à analyser.

Grâce à l'invention, on obtient une mesure pratiquement instantanée du pourcentage d'oxygène dans les gaz de combustion, les sondes utilisées étant pratiquement insensibles à l'encrassement de quelque nature qu'il soit, ces sondes étant également fidèles et de construction peu onéreuse. Les sondes de l'invention peuvent être utilisées dans une très large gamme de concentrations d'oxygène allant de 0 à 15% et dans une très large gamme de températures allant de 100°C (premières phases de la combustion) à plus de 800°C (régime permanent).

Les sondes de l'invention étant de très petites dimensions elles peuvent être facilement disposées, par exemple sur le trajet des gaz d'échappement d'un moteur de véhicule automobile ou d'un brûleur de chaudière, la tension électrique proportionnelle à la concentration en oxygène représentant le résultat de la mesure pouvant alors commander un dispositif de régulation dudit moteur ou dudit brûleur en contrôlant la richesse du mélange air/hydrocarbures pour assurer un fonctionnement optimal, ce qui permet de diminuer la pollution causée par ces gaz d'échappement, en particulier au ralenti pour un moteur lorsque le mélange air-carburant est pauvre.

·24

<u>REVENDICATIONS</u>

1. Sonde électrique à ionisation permettant la mesure proportionnelle de la concentration en oxygène dans un gaz composite de combustion comportant deux électrodes dont l'une est soumise à une haute tension électrique, le courant électrique circulant entre ces électrodes étant tel que des décharges électriques successives apparaissent par relaxation libre entre les électrodes et soient des décharges en étincelle lumineuses et bruyantes, caractérisée par le fait que les deux électrodes sont montées de façon à former un condensateur électrique de capacité supérieure à environ 10 pF, et de préférence comprise entre 10 et 100 pF capable de fournir une puissance électrique suffisante pour l'obtention de décharges en étincelle successives au cours desquelles la variation de la résistance électrique présente une pente négative.

2. Sonde selon la revendication 1, caractérisée par le fait que les deux électrodes sont constituées par deux éléments munis de pointes en saillie à rayons de courbure différents se faisant face et légèrement écartés l'un de l'autre de façon à obtenir des décharges électriques stables et symétrisées.

3. Sonde selon la revendication 2, caractérisée par le fait que les deux éléments comportent une pluralité de pointes effilées se faisant face.

4. Sonde selon la revendication 2, caractérisée par le fait que les deux éléments sont réalisés chacun sous la forme d'un segment de fil métallique, les deux fils étant alignés selon une même direction.

5. Sonde selon la revendication 2, caractérisée par le fait que chacun des deux éléments comprend une portion munie d'au moins une pointe en saillie et une portion sensiblement plane perpendiculaire à ladite pointe et exempte de pointe, les deux éléments étant montés de façon que la portion exempte de pointe d'un élément se trouve en face de la portion munie d'une pointe de l'autre élément, l'ensemble engendrant alors deux décharges symétriques.

6. Sonde selon la revendication 5, caractérisée par le fait que les deux portions de chaque élément sont distinctes et reliées en parallèle dans le circuit d'alimentation.

7. Sonde selon l'une quelconque des revendications précédentes, caractérisée par le fait que l'une des électrodes est soumise à une haute tension positive ou négative peu supérieure au potentiel d'ionisation de l'oxygène.

8. Sonde selon la revendication 7, caractérisée par le fait que l'électrode de polarité négative présente une pointe de rayon de courbure plus petit que celui de la pointe de l'électrode de polarité positive.

9. Sonde selon l'une quelconque des revendications précédentes, caractérisée par le fait que l'alimentation haute-tension de l'une des électrodes est telle que la fréquence des décharges successives soit comprise entre environ 100 Hz et 10 kHz.

10. Sonde selon l'une quelconque des revendications précédentes, caractérisée par le fait qu'elle comprend en outre des moyens de régulation agissant sur l'alimentation haute tension de façon que le rapport haute tension/courant, ou la haute tension, ou le courant délivré, soit maintenu à une valeur constante.

11. Sonde selon l'une quelconque des revendications précédentes, caractérisée par le fait qu'elle comprend en outre des moyens pour mesurer la valeur moyenne du courant apparaissant entre les deux électrodes.

12. Sonde selon l'une quelconque des revendications 1 à 10, caractérisée par le fait qu'elle comprend en outre des moyens pour mesurer la fréquence des décharges électriques entre les deux électrodes.

13. Sonde selon l'une quelconque des revendications 1 à 10, caractérisée par le fait qu'elle comprend en outre des moyens pour mesurer la valeur moyenne de la haute-tension appliquée sur l'une des électrodes.

14. Sonde selon la revendication 10, caractérisée par le fait qu'un filtre passe bas (85) est monté entre l'une des électrodes et la masse de façon à délivrer une tension proportionnelle à la valeur moyenne du courant d'étincelle apparaissant lors des décharges successives et qu'un amplificateur d'erreur (94) délivre un signal pour ajuster la haute-tension d'alimentation de l'autre électrode lorsque la tension précitée proportionnelle à la valeur moyenne du courant d'étincelle est différente d'une tension de référence prédéterminée, de façon à maintenir constant ladite valeur moyenne du courant d'étincelle.

15. Sonde selon la revendication 10, caractérisée par le fait qu'un filtre passe bas (85) est monté entre l'une des électrodes et la masse de façon à délivrer une tension proportionnelle à la valeur moyenne du courant d'étincelle apparaissant lors des décharges successives et qu'un amplificateur d'erreur (94) délivre un signal pour ajuster la haute-tension d'alimentation de l'autre électrode lorsque la tension précitée proportionnelle à la valeur moyenne du courant d'étincelle est différente de la tension apparaissant entre les deux électrodes lors des décharges successives, de façon à maintenir constant le rapport haute-tension/courant.

16. Sonde selon l'une quelconque des revendications 10 à 14, caractérisée par le fait que la haute-tension d'alimentation comporte un transformateur (112) délivrant un signal sinusoïdal d'amplitude variable en fonction d'impulsions de courant et des moyens pour ajuster automatiquement la fréquence des impulsions de courant à la fréquence de résonance du transformateur, lesdits moyens comprenant :

- un circuit d'asservissement de fréquence en phase (116) dont la fréquence varie en fonction de la phase entre ses deux entrées, recevant sur l'une de ses entrées lesdites impulsions de courant,

- et un circuit diviseur (118) dont la sortie (119) est reliée à l'autre entrée du circuit d'asservissement de fréquence en phase (116) et dont au moins une sortie codée commande le rapport cyclique des impulsions de courant.

17. Sonde selon l'une des revendications 10 à 14, caractérisée par le fait que la haute-tension d'alimentation est adaptée pour fournir un courant alternatif provoquant une décharge à chaque alternance.

18. Sonde selon l'une quelconque des revendications précédentes, caractérisée par le fait qu'elle comprend :

- une électrode centrale dont l'extrémité est en forme de pointe (134) connectée à la haute-tension électrique et noyée dans un manchon intérieur (137) en matériau réfractaire électriquement isolant à haute température;

- un élément métallique (138) entourant ledit manchon disposé coaxialement et relié à la terre de façon à constituer un anneau de garde récupérant les courant électriques de fuite;

- une électrode extérieure comportant une pointe (141) coaxiale à l'électrode centrale et légèrement écartée de cette dernière, fixée sur le fond (142) d'un organe conducteur en forme de capot perforé prolongé par un connecteur (145) noyé dans un manchon extérieur (140) en matériau électrique isolant, coaxial à l'électrode centrale;

- des moyens de fixation (146) solidaires du manchon extérieur pour fixer la sonde dans l'enceinte contenant les gaz de combustion à analyser.

19. Application d'une sonde selon l'une quelconque des revendications précédentes, à la commande de la richesse d'une combustion air/hydrocarbures caractérisée par le fait que l'on se sert de la tension électrique proportionnelle à la concentration d'oxygène mesurée pour effectuer la commande désirée.

FIG.1

## FIG.2

## FIG.3

FIG.4

**FIG.5**

FIG.6

6/12

0032209

FIG.7

7/12

0032209

FIG.8

FIG.9

8/12

0032209

FIG.10

0032209

FIG.11

10/12

0032209

FIG.12

11/12

0032209

## FIG.13

139
135
145
136
147 146
148
140
138
137
143
144
134
141
142